# EUROPEAN PATENT SPECIFICATION

(11) **EP 2 451 139 B1**
(45) Date of publication and mention of the grant of the patent: **07.01.2015**
(21) Application number: 10189894.8
(22) Date of filing: 03.11.2010
(51) Int. Cl.: H04M 1/67

(54) **Access to locked functions**
Zugriff auf gesperrte Funktionen
Accès à des fonctions verrouillées

(43) Date of publication of application: 09.05.2012
(73) Proprietor: BlackBerry Limited, Waterloo, ON N2K 0A7 (CA)
(72) Inventor: Hymel, James Allen, Waterloo Ontario N2L 5Z5 (CA)
(74) Representative: Roberts, Gwilym Vaughan

(56) References cited:
- EP-A1- 1 914 961
- WO-A1-03/075585
- WO-A1-2010/037898
- US-A1- 2008 254 767

## Description

### FIELD OF THE TECHNOLOGY

The present disclosure relates generally to mobile communications devices. More specifically, enabling implementations relate to mobile communications devices having a lock mode that can be bypassed and incorporating a camera assembly. The technology provides means and methods whereby a camera assembly in a mobile communications device may be utilized under certain conditions without compromising security of the mobile communications device. The technology extends the functionality of device applications in a secure manner. In at least one implementation, the technology provides for the temporary utilization of one or more mobile communication device applications without the inputting of an otherwise required password. The technology can be customized dynamically on a per device basis.

WO03/075585 discloses a method and a device for of changing the input states of an electronic device, the device comprising input means and being capable of carrying out user operations, the input states comprising a locked state, where the use of the input means is significantly restricted, and an unlocked state, where the use of the input means is not restricted, the locked state being enterable by a locking input, and the unlocked state being enterable by an unlocking input, characterized in that the input states further comprise an intermediate unlocked state; which method comprises the steps of: - entering said intermediate unlocked state based on user input; - detecting the termination of a user operation in said intermediate unlocked state, the user operation being other than said locking input; and entering said locked state, in response to said detection. There is also provided an input controller, a keypad and a mobile electronic device implementing these features.

Aspects of the invention are disclosed in the accompanying claims.

### BRIEF DESCRIPTION OF THE DRAWINGS

FIG. 1 illustrates a communication system including a mobile communications device to which example implementations of the technology can be applied.
FIG. 2 illustrates a block diagram of a mobile communications device.
Fig. 3 illustrates the steps of an exemplary method within the technology.
FIG. 4 illustrates the steps of an exemplary method within the technology.
FIG. 5 illustrates a front view of a mobile communications device to which example implementations of the technology can be applied.
FIG. 6 illustrates a rear view of a mobile communications device to which example implementations of the technology can be applied.
Fig. 7 illustrates an implementation of a front view of a mobile communications device with a display displaying device options.
FIG. 8 illustrates a first alternative implementation of a mobile communications device display displaying alternative display options.
FIG.9 illustrates a second alternative implementation of a mobile communications device display displaying alternative display options.
FIG. 10 illustrates a mobile communications device display displaying an exemplary notification within the technology.

### DETAILED DESCRIPTION

Reference will now be made in detail to implementations of the technology. Each example is provided by way of explanation of the technology only, not as a limitation of the technology. It will be apparent to those skilled in the art that various modifications and variations can be made in the present technology. For instance, features described as part of one implementation of the technology can be used on another implementation to yield a still further implementation. Thus, it is intended that the present technology cover such modifications and variations that come within the scope of the technology.

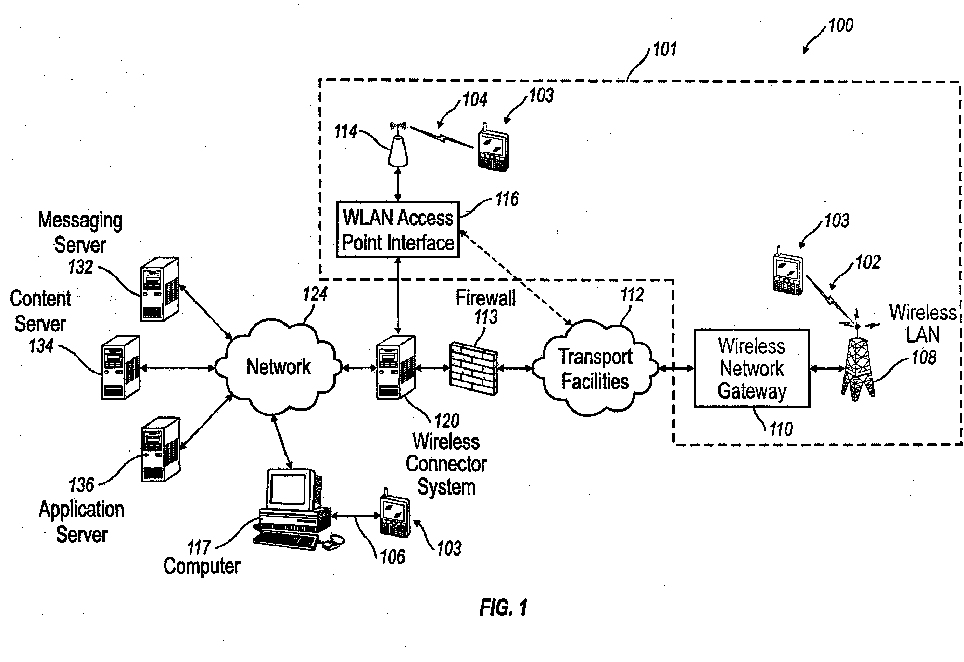

In order to facilitate an understanding of environments in which example implementations described herein can operate, reference is made to FIG. 1, which shows, in block diagram form, a communication system **100** in which implementations of the technology can be applied. The communication system **100** may comprise a number of mobile communications devices **103** that may be connected to the remainder of system **100** in any of several different ways. Accordingly, several instances of mobile communications devices **103** are depicted in FIG. 1 employing different example ways of connecting to system **100**.

These figures are exemplary only, and those persons skilled in the art will appreciate that additional elements and modifications may be necessary to make the communications device, e.g., **103** operable in particular network environments. While in the illustrated implementations, the communication devices, e.g., **103** may comprise smart phones, in other implementations, the communications devices may comprise personal digital assistants (PDA), tablet computers, laptop computers, desktop computers, servers, or other communications devices capable of sending and receiving electronic messages.

Mobile communications devices **103** are connected to a wireless network **101** that may comprise one or more of a Wireless Wide Area Network (WWAN) **102** and a Wireless Local Area Network (WLAN) **104** or other suitable network arrangements. In some implementations, the mobile communications devices **103** are configured to communicate over both the WWAN **102** and WLAN **104**, and to roam between these networks. In some implementations, the wireless network **101** may comprise multiple WWANs **102** and WLANs **104**.

The WWAN **102** may be implemented as any suitable wireless access network technology. By way of example, but not limitation, the WWAN **102** may be implemented as a wireless network that includes a number of transceiver base stations **108** where each of the base stations **108** provides wireless Radio Frequency (RF) coverage to a corresponding area or cell. The WWAN **102** is typically operated by a mobile network service provider that provides subscription packages to users of the mobile communications devices **103**. In some implementations, the WWAN **102** conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX"), or various other networks. Although WWAN **102** is described as a "Wide-Area" network, that term is intended herein also to incorporate wireless Metropolitan Area Networks (WMAN) and other similar technologies for providing coordinated service wirelessly over an area larger than that covered by typical WLANS.

The WWAN **102** may further comprise a wireless network gateway **110** that connects the mobile communications devices **103** to transport facilities **112**, and through the transport facilities **112** to a wireless connector system **120**. Transport facilities may include one or more private networks or lines, the Internet, a virtual private network, or any other suitable network. The wireless connector system **120** may be operated, for example, by an organization or enterprise such as a corporation, university, or governmental department, which allows access to a network **124** such as an internal or enterprise network (e.g., an intranet), and its resources, or the wireless connector system **120** may be operated by a mobile network provider. In some implementations, the network **124** may be realized using the Internet rather than, or in addition to, an internal or enterprise network.

The wireless network gateway **110** provides an interface between the wireless connector system **120** and the WWAN **102**, which facilitates communication between the mobile communications devices **103** and other devices (not shown) connected, directly or indirectly, to the WWAN **102**. Accordingly, communications sent via the mobile communications devices **103** are transported via the WWAN **102** and the wireless network gateway **110** through transport facilities **112** to the wireless connector system **120**. Communications sent from the wireless connector system **120** are received by the wireless network gateway **110** and transported via the WWAN **102** to the mobile communications devices **103.**

The WLAN **104** comprises a wireless network that, in some implementations, conforms to IEEE 802.11x standards (sometimes referred to as Wi-Fi TM) such as, for example, the IEEE 802.11a, 802.11b and/or 802.11g standard. Other communication protocols may be used for the WLAN **104** in other implementations such as, for example, IEEE 802.11n, IEEE 802.16e (also referred to as Worldwide Interoperability for Microwave Access or "WiMAX"), or IEEE 802.20 (also referred to as Mobile Wireless Broadband Access). The WLAN **104** includes one or more wireless RF Access Points (AP) **114** (one of which is shown in FIG. 1) that collectively provide a WLAN coverage area.

The WLAN **104** may be a personal network of the user, an enterprise network, or a hotspot offered by an internet service provider (ISP), a mobile network provider, or a property owner in a public or semi-public area, for example. The access pints **114** are connected to an access point (AP) interface **116** that may connect to the wireless connector system **120** directly, (for example, if the access point **114** is part of an enterprise WLAN **104** in which the wireless connector system **120** resides), or indirectly, as indicated by the dashed line in FIG. 1, via the transport facilities **112** if the access point **114** is a personal Wi-Fi network or Wi-Fi hotspot (in which case a mechanism for securely connecting to the wireless connector system **120**, such as a virtual private network (VPN), may be used). The AP interface **116** provides translation and routing services between the access points **114** and the wireless connector system **120** to facilitate communication, directly or indirectly, with the wireless connector system **120**.

The wireless connector system **120** may be implemented as one or more servers, and is typically located behind a firewall **113**. The wireless connector system **120** manages communications, including email, Hypertext Transfer Protocol (HTTP), and HTTP Secure (HTTPS) communications to and from a set of managed mobile communications devices **103**. The wireless connector system **120** also provides administrative control and management capabilities over users and mobile communications devices **103** that might connect to the wireless connector system **120**.

The wireless connector system **120** allows the mobile communications devices **103** to access the network **124** and connected resources and services such as a messaging server **132** (for example, a Microsoft Exchange Server®, IBM Lotus Domino®, or Novel GroupWise^{™} email server), a content server **134** for providing content such as Internet content or content from an organization's internal servers, application servers **136** for implementing server-based applications such as instant messaging (IM) applications to mobile communications devices **103**, and intranet file services.

The wireless connector system **120** typically provides a secure exchange of data (e.g., email messages, personal information manager (PIM) data, and IM data) with the mobile communications devices **103**. In some implementations, communications between the wireless connector system **120** and the mobile communications devices **103** are encrypted. In some implementations, communications are encrypted using a symmetric encryption key implemented using Advanced Encryption Standard (AES) or Triple Data Encryption Standard (Triple DES) encryption. Private encryption keys are generated in a secure, two-way authenticated environment and are used for both encryption and decryption of data. In some implementations, the private encryption key is stored only in the user's mailbox on the messaging server **132** and on the mobile communications device **103**, and can typically be regenerated by the user on mobile communications devices **103**. Data sent to the mobile communications devices **103** is encrypted by the wireless connector system **120** using the private encryption key retrieved from the user's mailbox. The encrypted data, when received on the mobile communications devices **103**, is decrypted using the private encryption key stored in memory. Similarly, data sent to the wireless connector system **120** from the mobile communications devices **103** is encrypted using the private encryption key stored in the memory of the mobile communications device **103**. The encrypted data, when received on the wireless connector system **120**, is decrypted using the private encryption key retrieved from the user's mailbox.

The wireless network gateway **110** is adapted to send data packets received from the mobile communications device **103** over the WWAN **102** to the wireless connector system **120**. The wireless connector system **120** then sends the data packets to the appropriate connection point such as the messaging server **132** or content servers **134** or application server **136**. Conversely, the wireless connector system **120** sends data packets received, for example, from the messaging server **132** or content servers **134** or application servers **136** to the wireless network gateway **110** that then transmit the data packets to the destination mobile communications device **103**. The AP interfaces **116** of the WLAN **104** provide similar sending functions between the mobile communications device **103**, the wireless connector system **120** and network connection point such as the messaging server **132**, content server **134** and application server **136.**

The network **124** may comprise a private local area network, metropolitan area network, wide area network, the public Internet or combinations thereof and may include virtual networks constructed using any of these, alone, or in combination. A mobile communications device **103** may alternatively connect to the wireless connector system **120** using a computer **117**, such as desktop or notebook computer, via the network **124**. A link **106** may be provided for exchanging information between the mobile communications device **103** and a computer **117** connected to the wireless connector system **120**. The link **106** may comprise one or both of a physical interface and short-range wireless communication interface. The physical interface may comprise one or combinations of an Ethernet connection, Universal Serial Bus (USB) connection, Firewire^{™} (also known as an IEEE 1394 interface) connection, or other serial data connection, via respective ports or interfaces of the mobile communications device **103** and computer **117**. The short-range wireless communication interface may be a personal area network (PAN) interface. A Personal Area Network is a wireless point-to-point connection meaning no physical cables are used to connect the two end points. The short-range wireless communication interface may comprise one or a combination of an infrared (IR) connection such as an Infrared Data Association (IrDA) connection, a short-range radio frequency (RF) connection such as one specified by IEEE 802.15.1 or the BLUETOOTH special interest group, or IEEE 802.15.3a, also referred to as UltraWideband (UWB), or other PAN connection.

It will be appreciated that the above-described communication system is provided for the purpose of illustration only, and that the above-described communication system comprises one possible communication network configuration of a multitude of possible configurations for use with the mobile communications devices **103**. Suitable variations of the communication system will be understood to a person of skill in the art and are intended to fall within the scope of the present disclosure.

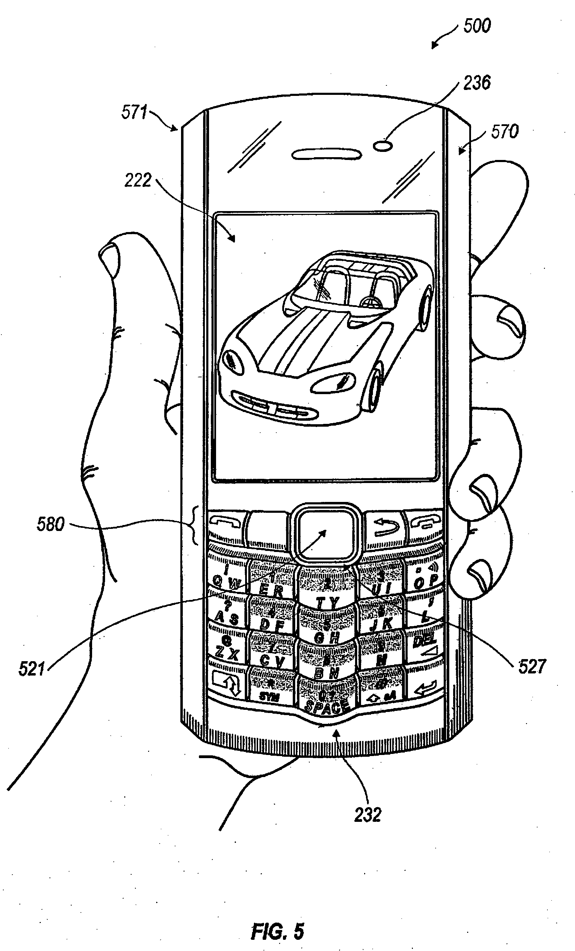

As will be appreciated from FIG. 5, an exemplary mobile communications device **500** (as an example of **103**) comprises a display **222** located above a keyboard **232** constituting a user input means that is suitable for accommodating textual input to the device **500**. In some implementations, the keyboard **232** can be part of a touch screen display **522**. The front face **570** of the device **500** has a navigation row **580**. As shown, the device **500** is of uni-body construction, also known as a "candy-bar" design.

The device **500** may include an auxiliary input that acts as a cursor navigation tool **527** and that may be also exteriorly located upon the front face **570** of the device **500**. The front face location of a cursor navigation tool **527** allows the tool to be thumb-actuable, e.g., like the keys of the keyboard **232**. Some implementations of the technology provide the navigation tool **527** in the form of a trackball (not shown) that may be utilized to instruct two-dimensional screen cursor movement in substantially any direction, as well as act as an actuator when the trackball is depressed like a button. Other implementations can provide the navigation tool in the form of a trackpad, a touchpad, a pointing stick, joystick, graphics tablet, or combinations thereof. The placement of the navigation tool **527** can be above the keyboard **232** and below the display **222**; here, it may avoid interference during keyboarding and does not block the operator's view of the display **222** during use.

The device **500** may be configured to send and receive messages. The device **500** includes a body **571** that can, in some implementations, be configured to be held in one hand by an operator of the device **500** during text entry. A display **222** is included that is located on a front face **570** of the body **571** and upon which information is displayed to the operator, e.g., during text entry. The device **500** may also be configured to send and receive voice communications such as mobile telephone calls. The device **500** also can include a camera **221** to allow the device **500** to take electronic photographs that can be referred to as photos or pictures or image data. The device **500** can include an audio recorder **223** that can be incorporated into a microphone **236** or can be separated from a microphone **236**. Further, the device **500** can be configured to operate a web browser.

The device **500** may further contain a sensor, e.g., proximity sensor, behind a cover mounted in an aperture defined in body **571**. In devices where substantially all the front face **570** of the device is a touch screen, a portion of the touch screen can constitute the cover.

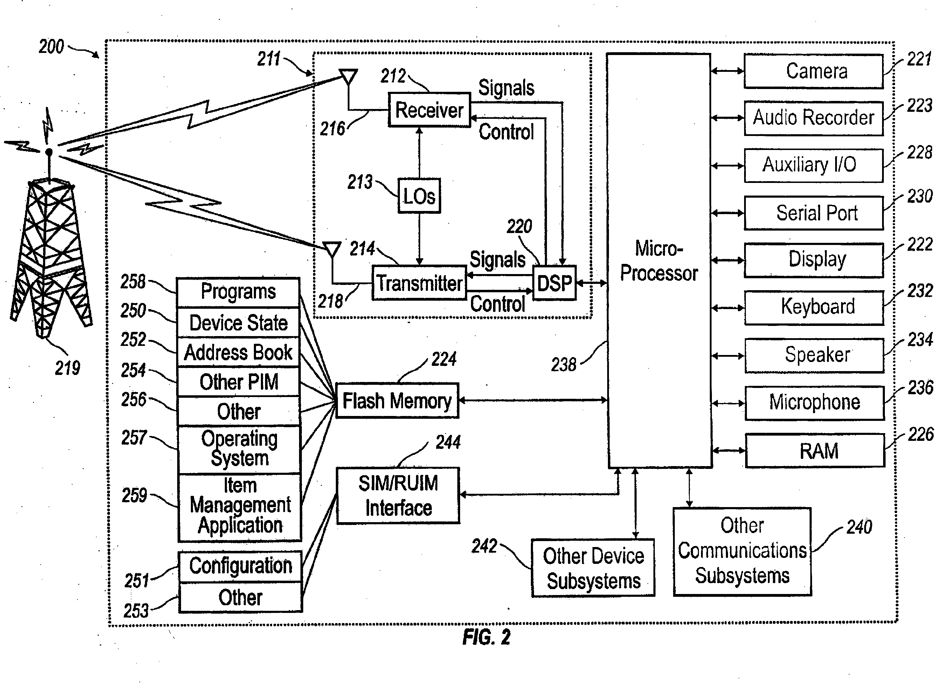

Referring to FIG. 2, a block diagram of a communications device, such as **500** and **103**, in accordance with an exemplary implementation is illustrated. As shown, the device **500** includes a processor **238** that controls the operation of the communications device **500**. A communication subsystem **211** performs communication transmission and reception with the wireless network **219**. The microprocessor **238** further can be communicatively coupled with an auxiliary input/output (I/O) subsystem **228**. In at least one implementation, the processor **238** can be communicatively coupled to a serial port (for example, a Universal Serial Bus port) **230** that can allow for communication with other devices or systems via the serial port **230**. A display **222** can be communicatively coupled to processor **238** to allow for display of information to an operator of the communications device **500**. When the communications device **500** is equipped with a keyboard **232**, the keyboard can also be communicatively coupled with the processor **238**. The communications device **500** can include a speaker **234**, a microphone **236**, random access memory (RAM) **226**, and flash memory **224**, all of which may be communicatively coupled to the processor **238**. Other similar components may be provided on the communications device **500** as well and optionally communicatively coupled to the processor **238**. Other communication subsystems **240** and other device subsystems **242** are generally indicated as being functionally connected with the processor **238** as well. An example of a communication subsystem **240** is a short range communication system such as BLUETOOTH® communication module or a WI-FI® communication module (a communication module in compliance with IEEE 802.11b) and associated circuits and components. Examples of other device subsystem **242** include a sensor and implementations of the present technology.

Additionally, the processor **238** is able to perform operating system functions and enables execution of programs on the communications device **500**. In some implementations not all of the above components are included in the communications device **500**. For example, in at least one implementation, the keyboard **232** is not provided as a separate component and is instead integrated with a touch screen as described below.

The auxiliary I/O subsystem **228** can take the form of a variety of different navigation tools (multi-directional or single-directional) such as a trackball navigation tool **521**, as illustrated in the exemplary implementation shown in FIG. 5, or a thumbwheel, a navigation pad, a joystick, touch-sensitive interface, or other I/O interface. These navigation tools may be located on the front surface of the communications device **500** or may be located on any exterior surface of the communications device **500**. Other auxiliary I/O subsystems may include external display devices and externally connected keyboards (not shown). While the above examples have been provided in relation to the auxiliary I/O subsystem **228**, other subsystems capable of providing input or receiving output from the communications device **500** are considered within the scope of this disclosure. Additionally, other keys may be placed along the side of the communications device **500** to function as escape keys, volume control keys, scrolling keys, power switches, or user programmable keys, and may likewise be programmed accordingly.

The keyboard **232** can include a plurality of keys that can be of a physical nature such as actuable buttons, or the actuable buttons can be of a software nature, typically constituted by representations of physical keys on a display **222** (referred to herein as "virtual keys"). It is also contemplated that the user input can be provided as a combination of the two types of keys. Each key of the plurality of keys is associated with at least one action that can be the input of a character, a command or a function. In this context, "characters" are contemplated to exemplarily include alphabetic letters, language symbols, numbers, punctuation, insignias, icons, pictures, and even a blank space.

In the case of virtual keys, the indicia for the respective keys are shown on the display **222**, which in one implementation is enabled by touching the display **222**, for example, with a stylus, finger, finger tip, finger nail, or other pointer, to generate the character or activate the indicated command or function. Some examples of displays **222** capable of detecting a touch include resistive, capacitive, projected capacitive, infrared and surface acoustic wave (SAW) touch screens.

Physical and virtual keys can be combined in many different ways as appreciated by those skilled in the art. In one implementation, physical and virtual keys are combined such that the plurality of enabled keys for a particular program or feature of the communications device **500** is shown on the display **222** in the same configuration as the physical keys. Using this configuration, the operator can select the appropriate physical key corresponding to what is shown on the display **222**. Thus, the desired character, command or function is obtained by depressing the physical key corresponding to the character, command or function displayed at a corresponding position on the display **222**, rather than touching the display **222.**

Furthermore, the communications device **500** is equipped with components to enable operation of various programs, as shown in FIG. 2. In an exemplary implementation, the flash memory **224** is enabled to provide a storage location for the operating system **257**, device programs **258**, and data. The operating system **257** is generally configured to manage other programs **258** that are also stored in memory **224** and executable on the processor **238**. The operating system **257** honors requests for services made by programs **258** through predefined program interfaces. More specifically, the operating system **257** typically determines the order in which multiple programs **258** are executed on the processor **238** and the execution time allotted for each program **258**, manages the sharing of memory **224** among multiple programs **258**, handles input and output to and from other device subsystems **242**, and so on. In addition, operators typically can interact directly with the operating system **257** through a user interface usually including the keyboard **232** and display **222**. While in an exemplary implementation the operating system **257** is stored in flash memory **224**, the operating system **257** in other implementations is stored in read-only memory (ROM) or similar storage element (not shown). As those skilled in the art will appreciate, the operating system **257**, device program **258**, or parts thereof, may be loaded in RAM **226** or other volatile memory.

In some implementations, the flash memory **224** may contain programs **258** for execution on the device **500**, including - but not limited to - an address book **252**, a personal information manager (PIM) **254**, and a device state **250**. Furthermore, programs **258**, such as social software, and other information **256** including data can be segregated upon storage in the flash memory **224** of the device **500**.

When the communications device **500** is enabled for two-way communication within the wireless communication network **219** (e.g., **108**), it can send and receive signals from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-T9), Ultra Mobile Broadband (UMB) networks, Worldwide Interoperability for Microwave Access (WiMAX), and other networks that can be used for data and voice, or just data or voice. For the systems listed above, the communications device **500** may use a unique identifier to enable the communications device **500** to transmit and receive signals from the communication network **219**. Other systems may not use such identifying information. GPRS, UMTS, and EDGE use a Subscriber Identity Module (SIM) in order to allow communication with the communication network **219**. Likewise, most CDMA systems use a Removable User Identity Module (RUIM) in order to communicate with the CDMA network. The RUIM and SIM card can be used in multiple different communications devices **500**. A communications device **500** can be configured to operate some features without a SIM/RUIM card, but a communications device will not necessarily be able to communicate with the network **219**. A SIM/RUIM interface **244** located within the communications device **500** allows for removal or insertion of a SIM/RUIM card (not shown). The SIM/RUIM card features memory and holds key configurations **251**, and other information **253** such as identification and subscriber related information. With a properly enabled communications device **500**, two-way communication between the communications device **500** and communication network **219** is possible.

If the communications device **500** is enabled as described above or the communication network **219** does not use such enablement, the two-way communication enabled communications device **500** is able to both transmit and receive information from the communication network **219**. The transfer of communication can be from the communications device **500** or to the communications device **500**. In order to communicate with the communication network **219**, the device **500** can be equipped with an integral or internal antenna **218** for transmitting signals to the communication network **219**. Likewise the device **500** can be equipped with another antenna **216** for receiving communication from the communication network **219**. These antennae **(216, 218)** in another exemplary implementation are combined into a single antenna (not shown). As one skilled in the art would appreciate, the antenna or antennae **(216**, **218)** in another implementation can be externally mounted on the communications device **500**.

When equipped for two-way communication, the communications device **500** features a communication subsystem **211**. As is understood in the art, a communication subsystem **211** is modified so that a communication subsystem can support the operational needs of a communications device **500**. The subsystem **211** includes a transmitter **214** and receiver **212** including the associated antenna or antennae **(216**, **218**) as described above, local oscillators (LOs) **213**, and a processing module that in the presently described exemplary implementation is a digital signal processor (DSP) **220**.

It is contemplated that communication by the communications device **500** with the wireless network **219** can be any type of communication that both the wireless network **219** and communications device **500** are enabled to transmit, receive and process. In general, these can be classified as voice or data, or both voice and data. Voice communication generally refers to communication in which signals for audible sounds are transmitted by the communications device **500** through the communication network **219**. Data generally refers to all other types of communication that the communications device **500** is capable of performing within the constraints of the wireless network **219**.

Example device programs that can depend on such data include email, contacts and calendars. For each such program, synchronization with home-based versions of the program can be desirable for either or both of the long term utility of device programs and the short term utility of device programs. As an example, emails are often time-sensitive, so substantially real time (or near-real time) synchronization may be desired. Contacts, on the other hand, can be usually updated less frequently without inconvenience. Therefore, the utility of the communications device **500** is enhanced when connectable within a communication system, and when connectable on a wireless basis in a network **219** in which voice, text messaging, and other data transfer are accommodated. Device **500** can include programs such as a web browser, a file browser, and client programs for interacting with server programs. Devices, e.g., **103**, **500**, for use in the technology can be characterized by an identification number assigned to the device. Such identification numbers cannot be changed and are locked to each device.

Implementations of the technology can be realized as including programming on a mobile communications device, e.g., **103**. In some implementations, programming for the technology is on the mobile communications device **103**, while data used by the mobile communications device **103** is on the wireless connector system **120** or a network server such as content server **134**, messaging server **132**, or application server **136**. In some implementations, programming for the technology can be realized on a remote server. Allocation of functionality among architectural elements can be a function of several factors including latency, processing resource availability and efficient usage, storage availability and efficient usage, and revenue opportunities.

In at least one implementation of the technology, in order to protect against unauthorized use, a mobile communications device can be locked such that a password or text must be entered via a keyboard **232** before device applications are enabled. A locked device **500** can be described as being in a locked mode. Situations can arise however, where it may be advantageous for certain device applications to be enabled even when a mobile communications device is in a locked mode. One example is the situation in which a user desires to use the camera **221** of the device **500** without having to enter a password. A situation in which a user desires to use the camera **221** of the device **500** without entering a password could occur, for example, when, during the time it would take to enter a password, the opportunity to take a photograph of a subject might pass. For example, a user who otherwise had not planned to take a photograph might observe a subject and desire to take a photograph quickly.

In some implementations of the technology, a mobile communications device comprises a locked function usage accumulator. The locked function usage accumulator comprises a current value and a predetermined limit. As examples, the predetermined limit may correspond to a number of photographs or a number of images. In this example, the locked function usage accumulator keeps track of the number of acquired images or stored images as the current value and the number of acquired images or stored images is compared to the predetermined limit. The current value can be compared to predetermined limit. If the current value is less than the predetermined limit, then the locked function, such as acquisition of image data or taking a photograph, can be performed using the camera.

In some implementations of the technology, the locked function usage accumulator comprises a current value and a predetermined limit. The predetermined limit may correspond to an amount of image data acquired or an amount of image data stored. In these implementations the locked function usage accumulator keeps track of the amount of image data acquired by the device **500** or the amount of image data stored by the device **500** as the current value, and the amount of image data acquired or the amount of image data stored is compared to the predetermined limit. If the current value is less than the predetermined limit, then the locked function, in this example, acquisition of image data or taking a photograph, can be performed using the camera **221**.

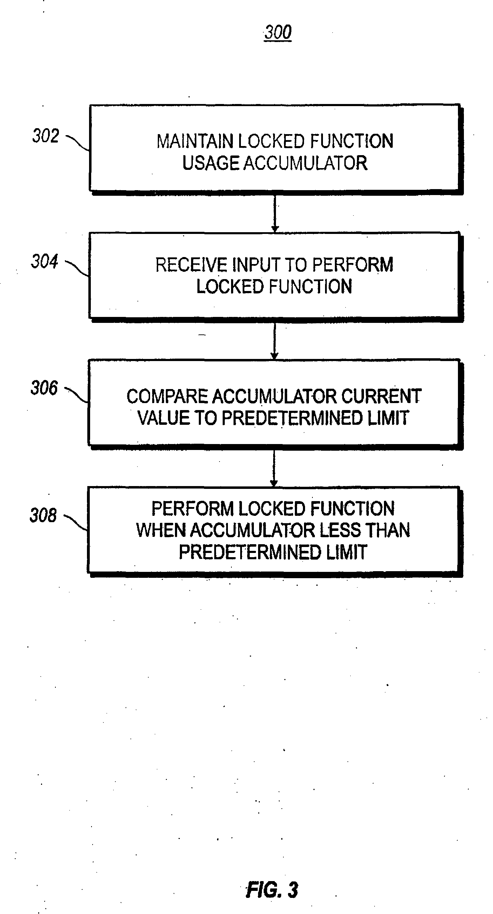

Figure 3 illustrates the steps in a method within this technology that can implement the example described in the preceding paragraph. A mobile communications device **500** is configured to maintain a locked function accumulator **302**. The mobile communications device receives input to perform a locked function **304**. As examples, the input to perform a locked function may be the depression of a certain button on the device **500**, for example a camera button, or the touching of a certain area on a touch screen display **222**. The current value of the locked function usage accumulator is compared to the predetermined limit. If the current value of the locked function usage accumulator is less than the predetermined limit the locked function, for example the taking of a photograph, is performed.

The mobile communications device **500** within this technology can increment the current value when a locked function occurs or is performed by the device **500**. Thus, for example, a device **500** can allow five photographs to be acquired while the device **500** is in a locked mode. The predetermined limit will therefore be understood to be five photographs or images. The current value is initially set to zero. Each time an image is acquired, the current value of the locked function usage accumulator is incremented by one. Each time the device **500** receives an input to perform a locked function, the current value (number of photographs taken), is compared to the predetermined limit of five photographs. Thus, when five photographs have been taken, the current value and the predetermined limit are equal. Thus, the device **500** will not perform the locked function because the current value comprised by the locked function usage accumulator is not less than the predetermined limit.

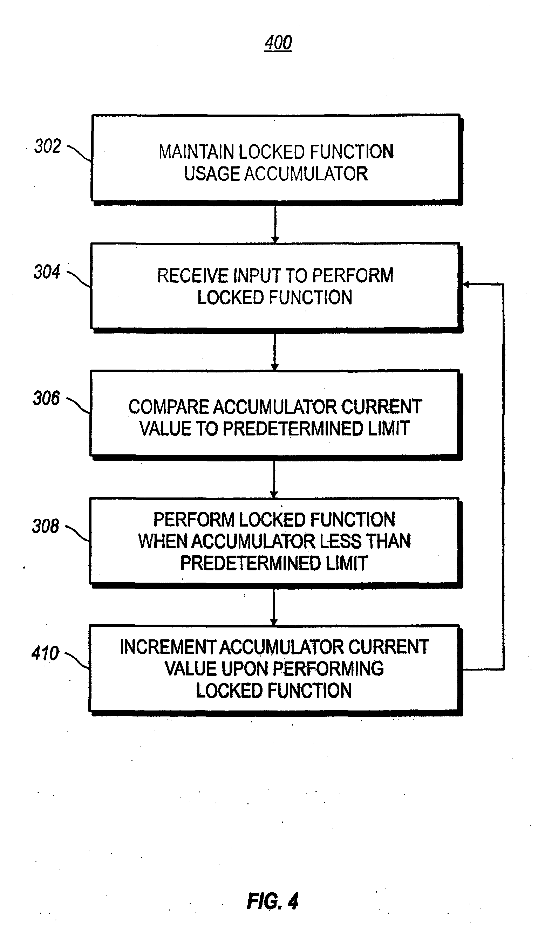

Figure 4 illustrates the steps in a method within this technology that can implement the example described in the preceding paragraph. A mobile communications device **500** is configured to maintain a locked function accumulator **302**. The mobile communications device receives input to perform a locked function **304**. The input to perform a locked function can be e.g., the depression of a certain button on the device **500,** for example a camera button, or the touching of a certain area on a touch screen display **222**. The current value of the locked function usage accumulator is compared to the predetermined limit **306**. If the current value of the locked function usage accumulator is less than the predetermined limit the locked function, for example the taking of a photograph, is performed **308**. In the method shown in Fig. 4, when a locked function, such as the acquisition of image data, is performed, the current value comprised by the locked function usage accumulator is incremented **410**.

Within this technology, a predetermined limit can be a number of stored or acquired images, as described above, or a predetermined limit can be an amount of image data acquired or an amount of image data stored. A predetermined limit can be a percentage of available memory allocated for image data. A predetermined limit can also be a number of sound or audio recordings acquired or a number or sound or audio recordings stored. Acquired sound or audio recordings can be stored locally on the device **500** or externally to the device **500**, on an application server **136** or on a computer **117**, for example. A predetermined limit can further be an amount of sound or audio data. All examples listed in this description are non-limiting and do not exclude the implementation of the technology using other data types.

Figure 5 illustrates a front view of a mobile communications device **500** in an unlocked mode. The device **500** may be configured to receive a signal to acquire image data via a camera **222** upon selection or depression of predefined keys in the keyboard **532**, upon selection or depression of one of the keys or buttons in a navigation row **580** or upon actuation or depression of a cursor navigation tool **527**. The device **500** comprises a microphone **236** that can be configured to cooperate with an audio recorder **223** to acquire sound data.

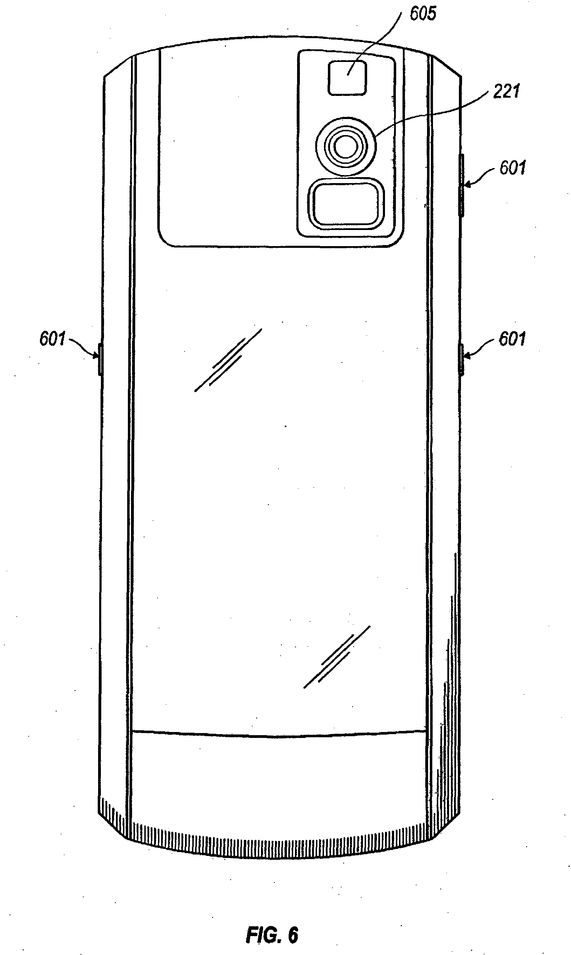

Figure 6 illustrates a back view of a mobile communications device **500** comprising a flash **605** and side buttons **601**. A mobile communications device can be configured so as to receive a signal, to acquire image data, or take a photograph, upon the depression or the selection of one or more of the side buttons **601**.

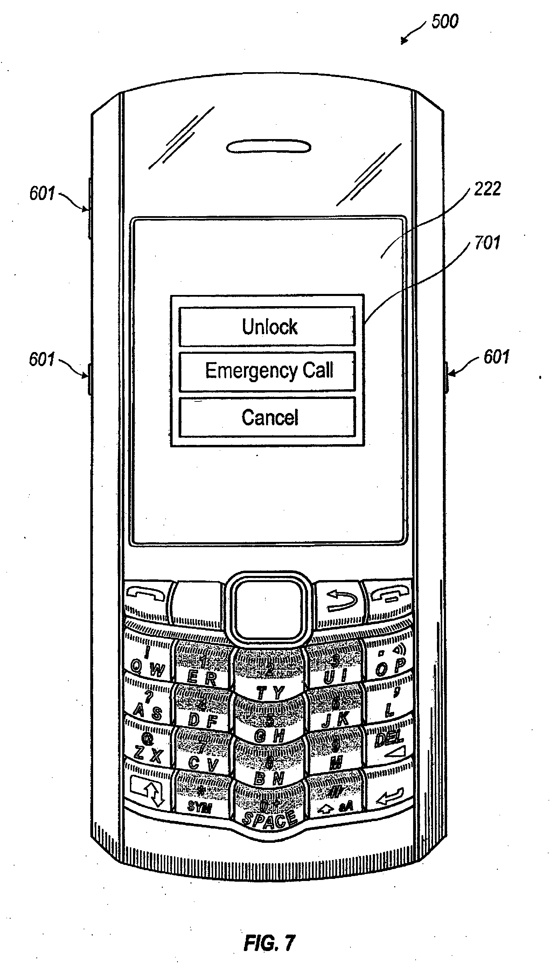

Figure 7 illustrates a locked mobile communications device **500** within this technology. The device **500** in Figure 7 can be said to be in a locked mode. The display **222** of the device **500** shows a device locked menu. The device locked menu **701** comprises three selectable options: unlock, emergency call, and cancel. If unlock is selected, the display **222** will display an input screen to accept entry of a predetermined password. If emergency call is selected, the display **222** will display an input screen to accept allow confirmation that an emergency call is to be placed. If an emergency call is confirmed as desired, an emergency call will be placed according to preconfigured settings and programming of the device **500**. As described above, a mobile communications device **500** can be configured to receive input to perform a locked function **304**, such as taking a photograph. A mobile communications device can be configured so as to receive a signal, to acquire image data, or take a photograph, upon the depression or the selection of one or more of the side buttons **601**. The locked device **500** may be configured to receive a signal to acquire image data via a camera **222** upon selection or depression of predefined keys in the keyboard **532**, upon selection or depression of one of the keys or buttons in a navigation row **580** or upon actuation or depression of a cursor navigation tool **527**.

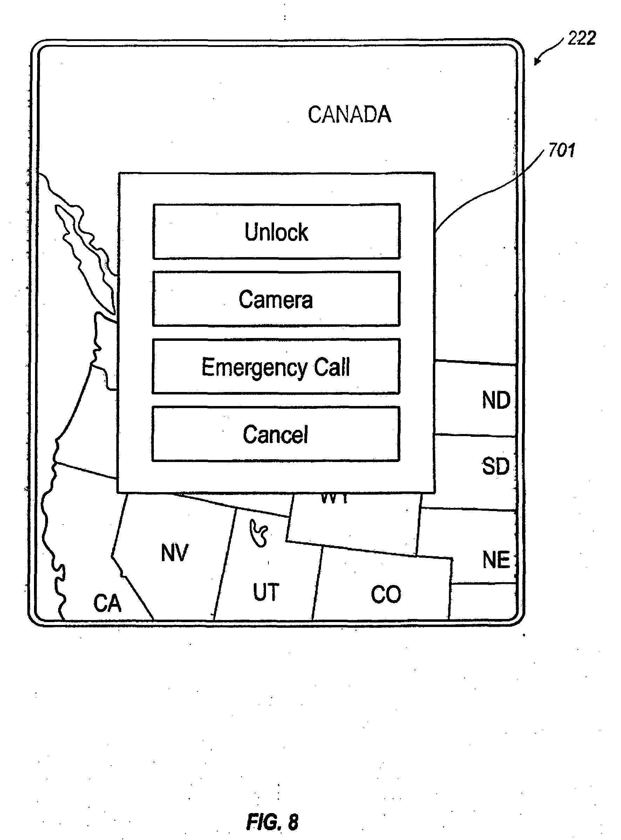

Figure 8 illustrates an exemplary implementation of a display **222** portion of a mobile communications device **500** that is in a locked mode. In the implementation illustrated in Figure 8, a lock menu **701** is displayed on the display **222**. The device locked menu **701** comprises four selectable options: unlock, camera, emergency call, and cancel. Selection of the camera option can comprise the inputting of a request to acquire image data or take a photograph.

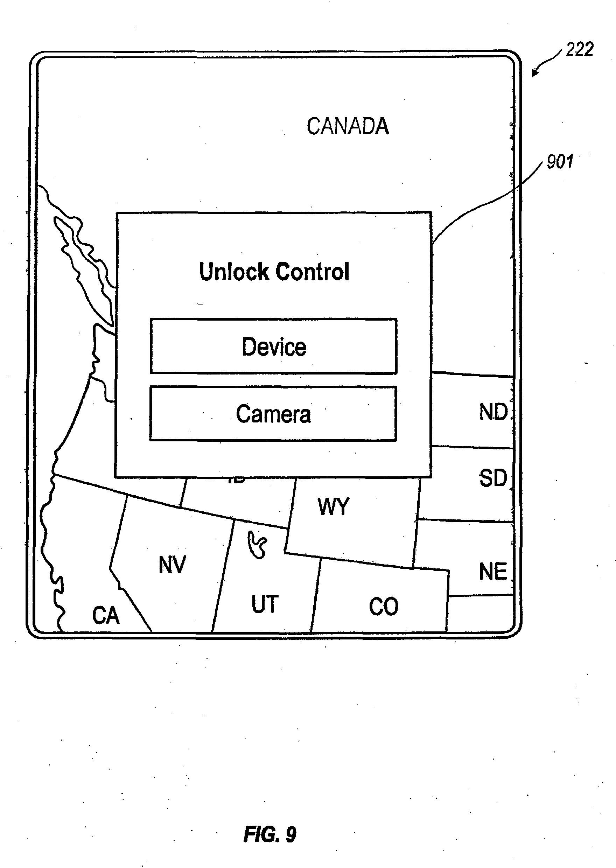

Figure 9 illustrates an exemplary implementation of a display **222** portion of a mobile communications device **500** that is in a locked mode. The display **222** provides an unlock control menu listing two options: device and camera. If device is selected, a list of selectable locked functions within this technology can be presented. Alternatively, and depending on the manner in which the mobile communications device **500** is configured according to the technology, if device is selected, the performance of a predefined locked function, such as acquisition of sound data via a microphone **236** or an audio recorder **223** or a microphone **236** and an audio recorder **223** can be implemented according to the technology.

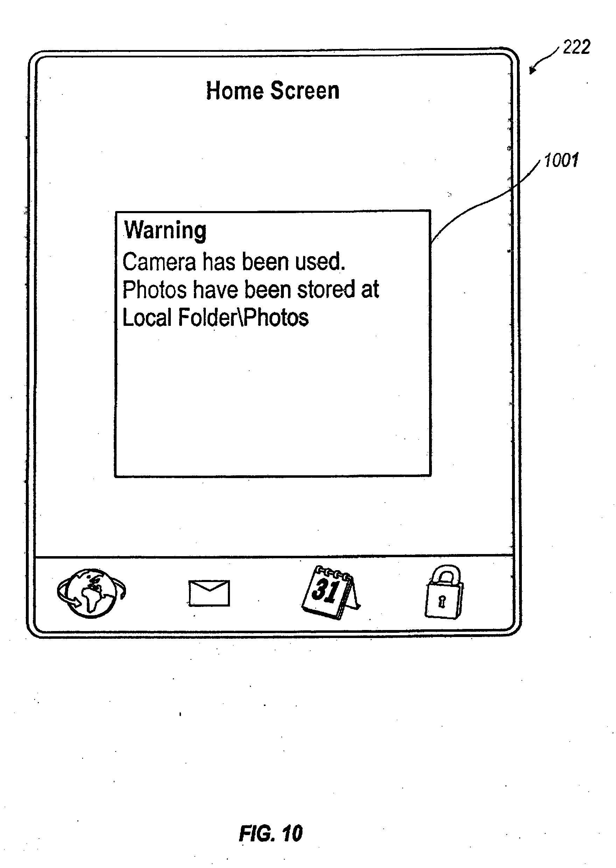

Figure 10 illustrates an exemplary display **222** of a mobile communications device **500** that displays an example of a locked function usage message **1001**. The device **500** can be configured within this technology to present a message to an authorized user that a locked function has been used or enabled. In the implementation shown in Figure 10, the display **222** presents information regarding where data acquired during a locked mode of the device **500,** has been stored.

The device **500** can further be configured to display the amount of locked device usage remaining. For example the display **222** can be configured to present the number of photographs which may still be acquired while in the locked mode. The display **222** can be configured to display the amount of time remaining in which a locked function may be performed.

Within the technology; a mobile communications device **500** can be configured to limit the amount of time in which one or more locked functions can be performed. This can be implemented by maintaining a time calculator for determining the amount of time that has elapsed after a specified event. An example of a specified event within this technology is a specified performance of locked function. An example of a specified performance of a locked function is a first performance of a locked function. An example of first performance of a locked function within the technology could be the first time image data is acquired since the last time the device **500** was unlocked via a password.

In further implementations of the technology, a mobile communications device **500** can be configured to maintain a locked usage accumulator and time calculator for determining an amount of lapsed time such that usage of one or more locked functions can be limited to both a predetermined limit of usage and a predetermined amount of time.

To limit usage of one or more locked functions according to both amount of locked device usage and an amount of time, whether the limit is acquisition of a predetermined number of photo images, a predetermined amount of image data acquired or stored, a predetermined number of sound recordings, or a predetermined amount of sound data acquired or stored, or some other limit, a mobile communications device **500** can be configured to maintain a locked function usage accumulator, while also maintain in a time calculator. The locked function usage accumulator can comprise a current value and a predetermined limit. A device **500** can be configured to receive input to perform a locked function, such as the depression of a predetermined button or selection of a predetermined menu option, compare the accumulator current value to the predetermined limit and perform the locked function when the accumulator is less than the predetermined limit. As described above, a mobile communications device **500** can be further configured to increment the accumulator current value upon performing the locked function and to maintain a time calculator for determining an amount of elapsed time. The device **500** can be further configured to lock the mobile communications device **500** after a predetermined amount of time has elapsed since a specified event.

Within the technology, a mobile communications device **500** can be configured or programmed send an email notification via a network **124** to an authorized user's email address notifying him or her that a locked function, such as the acquisition of image data via a device camera **221**, has occurred. In a further implementation of the technology, a device **500** may be configured to display a message **1001** on the device display **221** regarding the performance of one or more locked functions. An example of the presentation of such a message is depicted in Figure 10.

The technology can take the forms of hardware, or both hardware and software elements. In some implementations, the technology is implemented in software, which includes but is not limited to firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device **500**. The medium can be an electronic, magnetic, optical, electromagnetic, infrared, or semiconductor system (or apparatus or device **500**) or a propagation medium (though propagation mediums as signal carriers per se are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), DVD, and Blu Ray^{™}. Both processors and program code for implementing each as aspect of the technology can be centralized or distributed (or a combination thereof).

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device **500**. The medium can be an electronic, magnetic, optical, electromagnetic, infrared, or semiconductor system (or apparatus or device **500**) or a propagation medium (though propagation mediums as signal carriers per se are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof).

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

## Claims

1. A computer program product for enabling limited access to a locked function in a mobile communications device (500), the computer program product comprising:
a least one computer readable medium (224); and
at least one program module, stored on the at least one medium (224), and
operative, upon execution by at least one processor (238) to: maintain a locked function usage accumulator, the locked function usage accumulator comprising a current value and a predetermined limit;
receive input to perform a locked function when in a locked mode, compare the accumulator current value to the predetermined limit (306); and perform, when in the locked mode, the locked function when the accumulator is less than the predetermined limit (308); wherein the input comprises the associated function input; and wherein the locked function receives and stores image data or sound data.

2. The computer program product of claim 1, the at least one program module further operative, upon execution by at least one processor to:
increment the accumulator current value upon performing the locked function (410).

3. The computer program product of claim 2, the at least one program module further operative, upon execution by at least one processor (238) to:
maintain a time calculator for determining an amount of elapsed time; and
lock the electronic device after a predetermined amount of time has elapsed since a specified event.

4. The computer program product of claim 3, wherein the specified event is a first performance of the locked function.

5. The computer program product of claim 3 or 4, wherein the locked function is a camera function.

6. The computer program product of claim 3 or 4 or 5, wherein the locked function is a sound recorder function.

7. A mobile communications device (500) comprising:
at least one processor (238); and
a computer program product according to claim 1;
in communication with the processor (238);
and stored on the at least one medium (224).

8. The mobile communications device (500) of claim 7, the at least one program module operable, upon execution by the processor (238) to:
increment the accumulator current value upon performing the locked function (410);
maintain a time calculator for determining an amount of elapsed time; and
lock the mobile communications device after a predetermined amount of time has elapsed since a specified event.

9. A processor-implemented method for enabling limited access to a locked function in a mobile communications device (500), the method comprising:
maintaining a locked function usage accumulator, the locked function usage accumulator comprising a current value and a predetermined limit;
receiving input to perform a locked function when in a locked mode;
comparing the accumulator current value to the predetermined limit (306); and
performing, when in the locked mode, the locked function when the accumulator is less than the predetermined limit (308); wherein the input comprises the associated function input; and wherein the locked function receives and stores image data or sound data.

10. The processor-implemented method of claim 9, further comprising:
incrementing the accumulator current value upon performing the locked function (410).

11. The processor-implemented method of claim 9 or 10, further comprising:
maintaining a time calculator for determining an amount of elapsed time; and
locking the electronic device after a predetermined amount of time has elapsed since a specified event.

12. The processor-implemented method of claim 9 or 10 or 11, wherein the locked function is a camera function.

13. The processor-implemented method of claim 9, wherein the locked function is a sound recorder function.

14. The processor-implemented method of claim 9 or 10 or 11 or 12, wherein the predetermined limit is a number of images.

15. The processor-implemented method of claim 9, wherein the predetermined value is a stored image data value.

## Patentansprüche

1. Ein Computerprogrammprodukt zum Ermöglichen eines begrenzten Zugriffs auf eine gesperrte Funktion in einer mobilen Kommunikationsvorrichtung (500), wobei das Computerprogrammprodukt aufweist:
zumindest ein computerlesbares Medium (224); und
zumindest ein Programmmodul, das auf dem zumindest einen Medium (224) gespeichert ist, und
betriebsfähig, bei Ausführung durch zumindest einen Prozessor (238), zum Führen eines "gesperrte Funktion"-Benutzung-Akkumulators, wobei der "gesperrte Funktion"-Benutzung-Akkumulator einen aktuellen Wert und eine vorgegebene Grenze aufweist;
Empfangen einer Eingabe zum Durchführen einer gesperrten Funktion, wenn in einem gesperrten Modus, Vergleichen des aktuellen Werts des Akkumulators mit der vorgegebenen Grenze (306); und Durchführen, wenn in dem gesperrten Modus, der gesperrten Funktion, wenn der Akkumulator geringer ist als die vorgegebene Grenze (308); wobei die Eingabe die assoziierte Funktion-Eingabe aufweist; und wobei die gesperrte Funktion Bilddaten oder Tondaten empfängt und speichert.

2. Das Computerprogrammprodukt gemäß Anspruch 1, wobei das zumindest eine Programmmodul weiter betriebsfähig ist, bei Ausführung durch zumindest einen Prozessor, zum:
Inkrementieren des aktuellen Werts des Akkumulators bei einem Durchführen der gesperrten Funktion (410).

3. Das Computerprogrammprodukt gemäß Anspruch 2, wobei das zumindest eine Programmmodul weiter betriebsfähig ist, bei Ausführung durch zumindest einen Prozessor (238), zum:
Führen eines Zeitrechners zum Bestimmen einer vergangenen Zeitdauer; und
Sperren der elektronischen Vorrichtung, nachdem eine vorgegebene Zeitdauer seit einem spezifizierten Ereignis vergangen ist.

4. Das Computerprogrammprodukt gemäß Anspruch 3, wobei das spezifizierte Ereignis eine erste Durchführung der gesperrten Funktion ist.

5. Das Computerprogrammprodukt gemäß Anspruch 3 oder 4, wobei die gesperrte Funktion eine Kamerafunktion ist.

6. Das Computerprogrammprodukt gemäß Anspruch 3 oder 4 oder 5, wobei die gesperrte Funktion eine Tonaufnahmefunktion ist.

7. Eine mobile Kommunikationsvorrichtung (500), die aufweist:
zumindest einen Prozessor (238); und
ein Computerprogrammprodukt gemäß Anspruch 1;
in Kommunikation mit dem Prozessor (238);
und auf dem zumindest einen Medium (224) gespeichert.

8. Die mobile Kommunikationsvorrichtung (500) gemäß Anspruch 7, wobei das zumindest eine Programmmodul betriebsfähig ist, bei Ausführung durch den Prozessor (238), zum:
Inkrementieren des aktuellen Werts des Akkumulators bei einem Durchführen der gesperrten Funktion (410);
Führen eines Zeitrechners zum Bestimmen einer vergangenen Zeitdauer; und
Sperren der mobilen Kommunikationsvorrichtung, nachdem eine vorgegebene Zeitdauer seit einem spezifizierten Ereignis vergangen ist.

9. Ein prozessorimplementiertes Verfahren zum Ermöglichen eines begrenzten Zugriffs auf eine gesperrte Funktion in einer mobilen Kommunikationsvorrichtung (500), wobei das Verfahren aufweist:
Führen eines "gesperrte Funktion"-Benutzung-Akkumulators, wobei der "gesperrte Funktion"-Benutzung-Akkumulator einen aktuellen Wert und eine vorgegebene Grenze aufweist;
Empfangen einer Eingabe zum Durchführen einer gesperrten Funktion, wenn in einem gesperrten Modus;
Vergleichen des aktuellen Werts des Akkumulators mit der vorgegebenen Grenze (306); und
Durchführen, wenn in dem gesperrten Modus, der gesperrten Funktion, wenn der Akkumulator geringer ist als die vorgegebene Grenze (308);
wobei die Eingabe die assoziierte Funktion-Eingabe aufweist; und wobei die gesperrte Funktion Bilddaten oder Tondaten empfängt und speichert.

10. Das Prozessor-implementierte Verfahren gemäß Anspruch 9, das weiter aufweist:
Inkrementieren des aktuellen Werts des Akkumulators bei einem Durchführen der gesperrten Funktion (410).

11. Das Prozessor-implementierte Verfahren gemäß Anspruch 9 oder 10, das weiter aufweist:
Führen eines Zeitrechners zum Bestimmen einer vergangenen Zeitdauer; und
Sperren der elektronischen Vorrichtung, nachdem eine vorgegebene Zeitdauer seit einem spezifizierten Ereignis vergangen ist.

12. Das Prozessor-implementierte Verfahren gemäß Anspruch 9 oder 10 oder 11, wobei die gesperrte Funktion eine Kamerafunktion ist.

13. Das Prozessor-implementierte Verfahren gemäß Anspruch 9, wobei die gesperrte Funktion eine Tonaufnahmefunktion ist.

14. Das Prozessor-implementierte Verfahren gemäß Anspruch 9 oder 10 oder 11 oder 12, wobei die vorgegebene Grenze eine Anzahl von Bildern ist.

15. Das Prozessor-implementierte Verfahren gemäß Anspruch 9, wobei der vorgegebene Wert ein "gespeicherte Bilddaten"-Wert ist.

## Revendications

1. Produit de programme informatique pour permettre un accès limité à une fonction verrouillée dans un dispositif de communications mobile (500), le produit de programme informatique comprenant :
au moins un support lisible par ordinateur (224) ; et
au moins un module de programme, stocké sur le au moins un support (224), et
opérationnel, lors de l'exécution par au moins un processeur (238) pour : maintenir un accumulateur d'utilisation de fonction verrouillée, l'accumulateur d'utilisation de fonction verrouillée comprenant une valeur actuelle et une limite prédéterminée ;
recevoir une entrée pour exécuter une fonction verrouillée lorsqu'il est dans un mode verrouillé, comparer la valeur actuelle de l'accumulateur à la limite prédéterminée (306) ; et exécuter, lorsqu'il est dans le mode verrouillé, la fonction verrouillée lorsque l'accumulateur est inférieur à la limite prédéterminée (308) ; dans lequel l'entrée comprend l'entrée de fonction associée ; et dans lequel la fonction verrouillée reçoit et stocke des données d'image ou des données de son.

2. Produit de programme informatique selon la revendication 1, le au moins un module de programme étant en outre opérationnel, lors de l'exécution par au moins un processeur pour :
incrémenter la valeur actuelle de l'accumulateur lors de l'exécution de la fonction verrouillée (410).

3. Produit de programme informatique selon la revendication 2, le au moins un module de programme étant en outre opérationnel, lors de l'exécution par au moins un processeur (238) pour :
maintenir un calculateur de temps pour déterminer une quantité de temps écoulé ; et
verrouiller le dispositif électronique après qu'une quantité de temps prédéterminée s'est écoulée depuis un événement spécifié.

4. Produit de programme informatique selon la revendication 3, dans lequel l'événement spécifié est une première exécution de la fonction verrouillée.

5. Produit de programme informatique selon la revendication 3 ou 4, dans lequel la fonction verrouillée est une fonction appareil photo.

6. Produit de programme informatique selon la revendication 3 ou 4 ou 5, dans lequel la fonction verrouillée est une fonction enregistreur de son.

7. Dispositif de communications mobile (500) comprenant :
au moins un processeur (238) ; et
un produit de programme informatique selon la revendication 1 ;
en communication avec le processeur (238) ;
et stocké sur ledit au moins un support (224).

8. Dispositif de communications mobile (500) selon la revendication 7, le au moins un module de programme étant exploitable, lors de l'exécution par le processeur (238) pour :
incrémenter la valeur actuelle de l'accumulateur lors de l'exécution de la fonction verrouillée (410) ;
maintenir un calculateur de temps pour déterminer une quantité de temps écoulé ; et
verrouiller le dispositif de communications mobile après qu'une quantité de temps prédéterminée s'est écoulée depuis un événement spécifié.

9. Procédé mis en oeuvre par processeur pour permettre un accès limité à une fonction verrouillée dans un dispositif de communications mobile (500), le procédé comprenant :
le maintien d'un accumulateur d'utilisation de fonction verrouillée, l'accumulateur d'utilisation de fonction verrouillée comprenant une valeur actuelle et une limite prédéterminée ;
la réception d'une entrée pour exécuter une fonction verrouillée lorsqu'il est dans un mode verrouillé ;
la comparaison de la valeur actuelle de l'accumulateur à la limite prédéterminée (306) ; et
l'exécution, lorsqu'il est dans un mode verrouillé, de la fonction verrouillée lorsque l'accumulateur est inférieur à la limite prédéterminée (308) ;
dans lequel l'entrée comprend l'entrée de fonction associée ; et
dans lequel la fonction verrouillée reçoit et stocke des données d'image ou des données de son.

10. Procédé mis en oeuvre par processeur selon la revendication 9, comprenant en outre :
l'incrémentation de la valeur actuelle de l'accumulateur lors de l'exécution de la fonction verrouillée (410).

11. Procédé mis en oeuvre par processeur selon la revendication 9 ou 10, comprenant en outre :
le maintien d'un calculateur de temps pour déterminer une quantité de temps écoulé ; et
le verrouillage du dispositif électronique après qu'une quantité de temps prédéterminée s'est écoulée depuis un événement spécifié.

12. Procédé mis en oeuvre par processeur selon la revendication 9 ou 10 ou 11, dans lequel la fonction verrouillée est une fonction appareil photo.

13. Procédé mis en oeuvre par processeur selon la revendication 9, dans lequel la fonction verrouillée est une fonction enregistreur de son.

14. Procédé mis en oeuvre par processeur selon la revendication 9 ou 10 ou 11 ou 12, dans lequel la limite prédéterminée est un nombre d'images.

15. Procédé mis en oeuvre par processeur selon la revendication 9, dans lequel la valeur prédéterminée est une valeur de données d'image stockées.
